# EUROPEAN PATENT SPECIFICATION

(11) **EP 0 868 652 B1**
(45) Date of publication and mention of the grant of the patent: **19.03.2003**
(21) Application number: 96942456.3
(22) Date of filing: 16.12.1996
(51) Int. Cl.: G01F 1/32

(54) **FLUIDIC FLOWMETER**
DURCHFLUSSMESSER MIT EINEM FLUIDISCHEN OSZILLATOR
DEBITMETRE FLUIDIQUE

(30) Priority: 20.12.1995 GB 9526067
(43) Date of publication of application: 07.10.1998
(73) Proprietor: SEVERN TRENT WATER LIMITED, Birmingham, B26 3PU (GB)
(72) Inventor: FURMIDGE, Neil, Sheffield S7 1RP (GB); SANDERSON, Michael, Langley, Bedford MK43 0JD (GB)
(74) Representative: Makovski, Priscilla Mary
(86) International application number: GB9603096
(87) International publication number: WO97022854

(56) References cited:
- EP-A- 0 381 344
- WO-A-89/05441
- WO-A-96/24774
- FR-A- 2 690 717
- US-A- 5 396 808

## Description

There is described in EP-A2-0 381 344 a water meter of the feedback fluidic oscillator type suitable for use as a domestic water supply meter.

As described therein, such a meter comprises a convergent entry leading into a jet-forming orifice in the form of an elongate slit. The slit directs a jet of water into a divergent main channel which is divided by a splitter. Feedback loops from the main channel return to opposite sides of the path of the jet adjacent to the inlet. The jet of fluid attaches itself to one main channel wall and then the other, repeatedly switching back and forth laterally at a frequency dependent upon the rate of flow. Measurements of the frequency of the oscillations can, therefore, be used as a measure of flow rate. As described in EP-A2-0 381 344, such measurement may be done by creating a magnetic field across at least one of the channels and measuring the frequency of the resultant potential difference generated in a direction transverse to the flow and the magnetic field.

Such an oscillating jet type of fluidic flowmeter may be equipped with a linearisation and temperature compensation scheme which is restricted in its potential complexity by the limitations of a low power microprocessor based algorithm. For this and other reasons it may be required that the meterfactor response curve of the fluidic oscillator be as linear as possible, with variations in meterfactor occurring through smooth transitions rather than rapid step changes.

Particularly for a water meter, this is difficult to achieve. To meet domestic water meter performance specifications the meter is required to operate over a wide range of flow conditions. from fully laminar flow at low flowrates, through transitional conditions and into fully turbulent flow at high flow rates. The velocity flow profile across the pipe, which changes with those different flow conditions, influences the performance of a fluidic oscillator flowmeter by altering both the jet flow characteristics and the complex local flow patterns around the internal geometry of the flowmeter. As a result, the varying flow conditions cause the fluidic oscillator to behave in a non-linear way, with abrupt changes in meterfactor response through the flow range.

The use of devices to improve flow characteristics in pipes, not least upstream of the entry to flowmeters, is well known. Such devices may be one of two kinds, commonly referred to as flow conditioners and flow straighteners.

Flow conditioners are conventionally used in fully turbulent flow conditions to restore a standard (flat) velocity flow profile following some disturbance in an inlet pipe. They are installed at a distance upstream from the flowmeter (typically, 5D to 10D from the meter inlet, where D is the diameter of the pipe) to allow a standard velocity flow profile and level of turbulence to become re-established before the flow enters the meter. Such devices are ordinarily used with meters which are required to operate only at higher Reynolds numbers (i.e. turbulent flow conditions).

The other kind of flow conditioning device commonly used is a flow straightener. Flow straighteners are used to remove swirl in installations where there are insufficient upstream lengths of straight pipe following a bend in the pipework. However. they do not bring the profile into symmetry.

For many purposes, meters are required to operate in only one flow regime, that is fully turbulent flow, and under such consistent conditions known conditioning devices can be helpful. However, to achieve the flow range required to meet domestic water metering specifications, a fluidic water meter must be capable of operating at a range of flow conditions which span from fully turbulent flow, through a transitional region, and into fully laminar flow. The known conditioning devices and the ways in which they are customarily used do not provide a solution to the problem of improving the linearity of a meter operating over such a large turndown range.

At low flowrates the velocity of the fluid is not the same at all points across the pipe because of frictional effects at the pipe wall (leading to a parabolic velocity flow profile) and as the flow velocity increases turbulence starts to develop within the flow so that at sufficiently high Reynolds numbers flow becomes fully turbulent and the flow profile becomes flat across the pipe. The turbulent to laminar flow transition at the inlet of the meter causes the flow patterns within the fluidic oscillator to vary significantly and result in the Strouhal number changing suddenly with Reynolds number, resulting in substantial non-linearity.

It is an object of the present invention to enable an oscillating jet type of fluidic flowmeter to maintain substantial linearity throughout a wide range of inlet flow conditions, including fully developed turbulent flow and flow at low Reynolds numbers where it is transitional or laminar.

US-A-5 396 808 discloses a fluidic oscillator type flow conditioner in which a front surface of the obstacle onto which the jet is directed has cavities which affect the flow and a conditioning plate upstream of the jet channel which is shaped to flatten the flow profile of the device. The plate is arranged such that it does not introduce turbulence into the flow of fluid but makes the velocity profile flatter for low and high flow rates.

The invention provides a fluidic flowmeter of an oscillating jet type in which a jet of fluid discharged from an elongate jet-forming orifice is caused to oscillate in a plane transversely of the plane of the orifice, the rate of oscillation of the jet being measurable as an indication of the flowrate through the meter, the flow meter comprising flow conditioning means which is positioned upstream of the jet-forming orifice and is effective under laminar and transitional inlet flow conditions to flatten the velocity flow profile and to introduce turbulence into the flow whereby turbulent flow conditions are simulated at the orifice.

It has been found that by causing disturbances in the inlet flow which both flatten the velocity flow profile and introduce turbulence into the flow, resulting in a fully developed turbulent flow being simulated at the jet-forming orifice, the linearity of the meter over a wide flow range (from low Reynolds numbers upwards) can be greatly improved. Furthermore, it has also been found that such conditioning of the inlet flow can also enable the flowmeter to operate at lower flow rates than otherwise, oscillation of the jet being maintained for longer as the flow rate is reduced; this can give the meter an increased operational range. A further benefit of the invention can be a greater tolerance of installation conditions, the operation of the conditioning means resulting in uniformity in the flow to the jet-forming orifice despite variations in the condition of the inlet flow from disturbances upstream.

The conditioning means is preferably positioned immediately adjacent to, or within, an entry passage which leads into the jet-forming orifice and which in the direction of flow is convergent in planes perpendicular to the plane of the orifice. Such an entry passage can have the effect of amplifying the turbulence effect, introduced by the conditioning means, whereby a fully developed turbulent flow can be simulated at the orifice.

In one effective construction, the conditioning means forms a plurality of openings which are spaced apart laterally of the general direction of flow and through which the inlet flow passes. The openings preferably all lie in a plane perpendicular to the direction of flow, and in one preferred arrangement consist of a central array of relatively small holes encircled by relatively large holes. The conditioning means may comprise a body in the form of a multi-apertured plate which extends as a barrier across the flow.

In another effective construction, the conditioning means forms bluff elongate blocking elements which are spaced apart laterally of the general direction of flow and which separate elongate passages through which the inlet flow passes. Each flow passage may comprise a row of separate openings or may be in the form of a single elongate slot. In either case, the elongate blocking elements and the flow passages preferably lie in planes parallel to the plane of the jet-forming orifice. Again, the conditioning means may comprise a body in the form of a multi-apertured plate which extends as a barrier across the flow.

There now follows a detailed description, to be read with reference to the accompanying drawings, of a fluidic flowmeter and alternative flow conditioners which illustrate the invention by way of example.

In the accompanying drawings:
**Figure 1** is a view in perspective. from an inlet end, of a body of a fluidic flowmeter according to the invention:
**Figure 2** is a plan view of the meter body;
**Figure 3** is a meterfactor response curve for such a meter without any inlet flow conditioning;
**Figure 4** is an axial view showing the hole pattern of a first example of conditioner disc;
**Figure 5** shows a meterfactor response curve obtained utilising the conditioner disc of Figure 4:
**Figure 6** shows a slot pattern of a second example of conditioning disc; and
**Figure 7** shows a meterfactor response curve obtained utilising the slot-type conditioner disc of Figure 6.

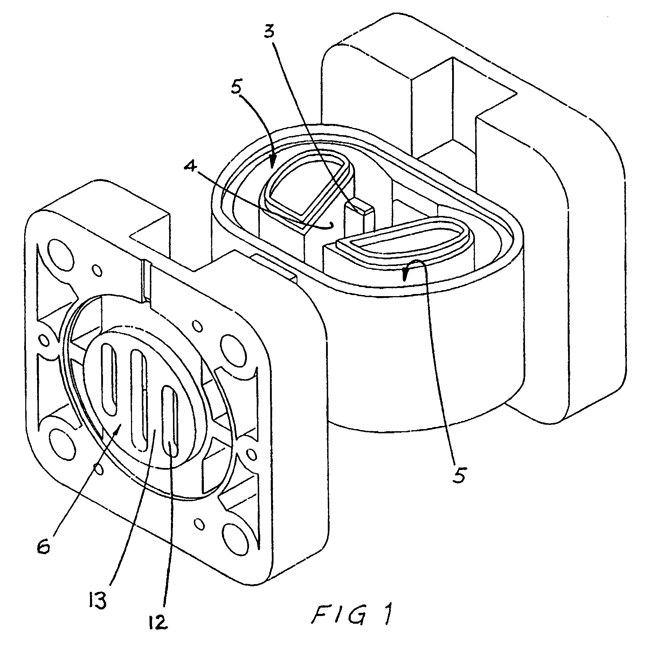

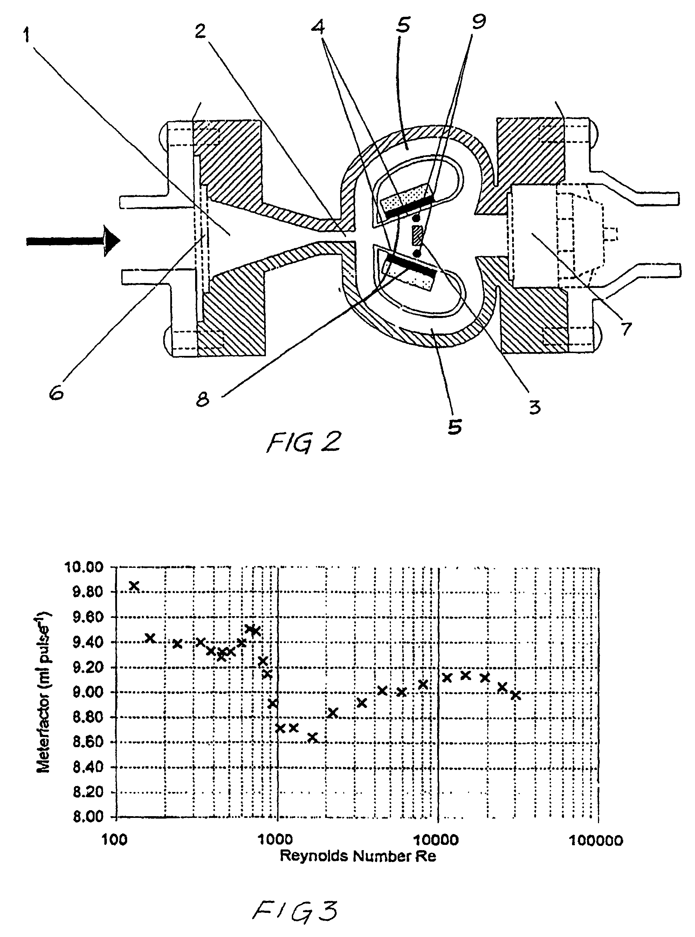

The geometry of an oscillating jet type of fluidic flowmeter, for metering domestic water supplies, is shown in Figures 1 and 2. The meter is of a feedback fluidic oscillator type, which consists of a convergent entry passage 1 which leads into an elongate jet-forming orifice 2 (the orifice being in the form of a slit extending in a direction perpendicular to the plan of Figure 2), a splitter post 3, two divergent attachment walls 4, and two feedback channels 5. Such a construction of flowmeter is known from EP-A-0 381 344. The direction of inlet flow is shown by an arrow in Figure 2, the flow entering the entry passage 1 through a conditioning disc 6 at its mouth, the disc being in the form of a multi-apertured plate.

As fluid enters the meter a jet flow is formed by the converging entry passage 1 and orifice 2. The entry passage is convergent only in planes perpendicular to the plane of the orifice. The attachment walls 4 provide forces on the jet flow through the action of the Coanda effect and the jet becomes caused to bend towards one wall and flow along it. The wall to which the jet first becomes attached is determined by random fluctuations in the jet which are amplified by the Coanda effect.

The jet flow travels along the attachment wall 4, passing to one side of the splitter post 3 and through the meter outlet 7. As the flow is biased to one side, some of the main flow becomes entrained within the adjacent feedback channel 5 and travels through the channel to emerge next to the orifice outlet at an angle perpendicular to the jet flow. The feedback flow becomes entrained in a separation bubble between the orifice and diffuser wall. As the separation bubble becomes larger the jet moves away from the attachment wall until the jet meets the splitter post 3, whereupon the separation bubble bursts and the jet flow becomes attached to the opposite attachment wall. The feedback process is then repeated through the opposite feedback channel 5. A sustained lateral oscillation of the jet flow becomes developed, the rate of oscillation being dependent upon the flow rate.

Sensing of the oscillations within the fluidic water meter is carried out using electromagnetic induction. Two permanent magnets 8 mounted within the attachment walls 4 create a magnetic field, orthogonal to the jet flow. which generates an e.m.f. within the liquid itself. The induced voltage is detected using stainless steel electrodes 9 mounted in the top of the flow chamber on each side of the splitter post 3. Since power is generated by the electromagnetic inductive effect, the sensor itself requires no power. The only power required by the water meter is for the amplification and processing of the generated signal.

A plot of meterfactor (volume flow per pulse) against Reynolds number for the flowmeter operating without the conditioning disc 6 is shown in Figure 3. At Reynolds numbers greater than 2500 the response is relatively flat and the device behaves in a linear manner to within ± 1.25%. This corresponds to a fully turbulent flow regime in the jet.

At Reynolds numbers between 700 and 2500 there are peaks in the meterfactor characteristic. The rapid rates of change in meterfactor with change in Reynolds number mean that the fluidic oscillator is not behaving in a linear manner, with peak to peak deviation in excess of ±5%. At these Reynolds numbers the inlet flow condition is transitional.

At Reynolds numbers below 700 the meterfactor characteristic rises steadily with reducing Reynolds number. This is due to viscous damping reducing oscillation frequency at a greater rate than the change in frequency with Reynolds number. Once Reynolds number is below a minimum value the jet flow becomes stable and oscillations cease altogether.

As the flowrate is reduced the velocity flow profile at the inlet becomes increasingly parabolic and the turbulence levels within the jet flow become increasingly stable. The varying levels of jet stability and altering flow patterns within the oscillator cause variations in rate of change of oscillation frequency with flowrate. This results in a non-linear meterfactor characteristic when the jet flow condition is transitional and laminar, which is undesirable from an operational point of view.

The convergent entry passage 1 (immediately upstream of the jet-forming orifice 2) itself distorts the profile of the flow as the section reduces in width. The flow conditioner 6 is mounted immediately upstream of the convergence, so that the convergence will amplify, and add to, distortion produced by the conditioner.

Conditioning of the fluidic oscillator inlet flow by means of the conditioning disc 6 increases the linearity of the device over the required flow range. This is achieved by causing flattening of the velocity flow profile (i.e. making it more like that of a fully developed turbulent flow) and introducing turbulence, so resulting in a smoothing of the contour of the meterfactor response by reducing the severity of the changes in jet flow condition. The transition from one flow stage to another is improved by disturbing the jet flow so that turbulent conditions are sustained at lower flowrates, thus reducing the definition of the two distinct flow conditions, over a narrower range than the transition normally occurs.

Improving the meterfactor response is not as simple as merely altering the Reynolds number at which transition from one flow condition to another occurs because there are many other processes occurring within the fluidic oscillator, all of which are dependent to some extent on the condition of the jet flow. These processes include the Coanda effect, the build up and separation of boundary layers along the attachment walls 4 and internal faces of the flow chamber, the velocity flow profile of flow within the feedback channels 5, the entrainment of feedback flow and the stability of the jet. The inlet flow condition must be tuned to match and enhance the operational characteristics of the fluidic oscillator.

The use of the conditioning disc 6 generates a disturbance at the meter inlet which is amplified as it travels through the convergent entry passage 1. This introduces instability into the jet flow where the flow would ordinarily be under fully laminar conditions. Instabilities of the jet flow are amplified by the Coanda effect and help to simulate the flow conditions under which the meter would be operating during the turbulent flow regime. Maintaining turbulence in the jet flow during transitional and laminar inlet flow conditions reduces the variation in Strouhal number with Reynolds number across the range of the flow transition.

The use of the conditioning disc 6 dramatically improves the linearity of the flowmeter, as can be seen from a comparison of Figures 3 and 7. When fitted with the flow conditioner the linearity of the fluidic oscillator is such that the meterfactor response may be used by a simple linearity and temperature compensation scheme.

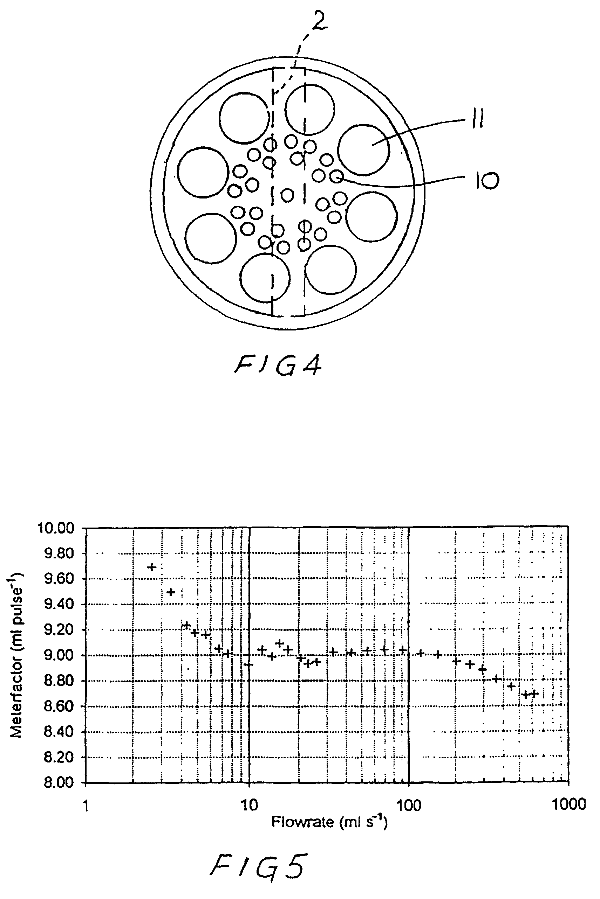

A first conditioning disc 6 (Figure 4) comprises an array of smaller holes 10 within a surround of larger holes 11. The relative position and inclination of the jet-forming orifice 2 is shown in broken line. The disc is in the form of an apertured plate of 2mm thickness and 22mm diameter having eight 4mm diameter holes 11 on a 7mm radius, eight 1mm diameter holes 10 on a 3mm radius, sixteen 1mm diameter holes 10 on a 4.25mm radius, and a 1mm diameter centre hole 10.

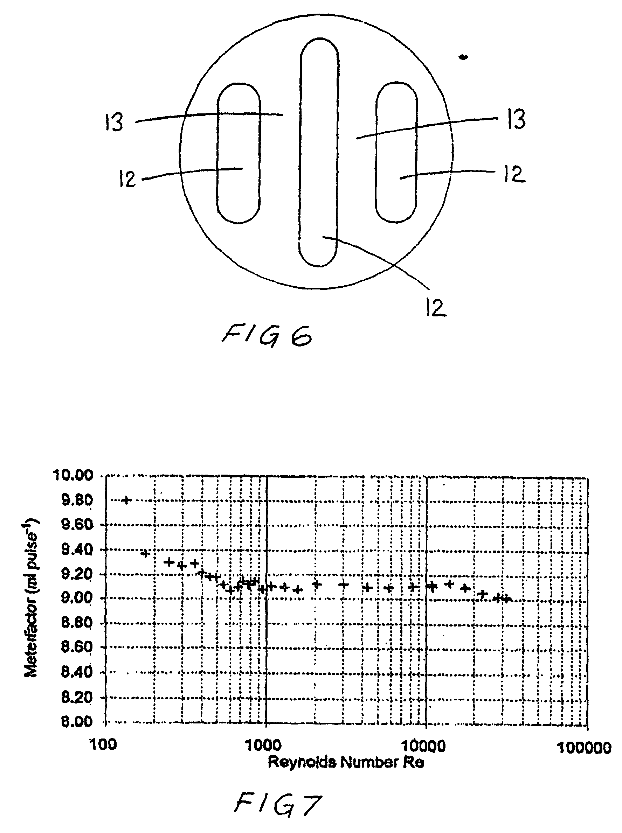

The meterfactor response (Figure 5) produced by use of the first disc has very smooth changes from laminar to transitional flow and from transitional to turbulent jet flow. The magnitude of the minimum peak during the change from laminar to transitional conditions is relatively small and if a centre line for the meterfactor response curve is carefully selected the response is within ±2% over most of the range, except at very low flowrates. The shape of the response is such that a best straight line model of the curve could satisfactorily be used by a simple linearisation and temperature compensation scheme.

Conditioner discs with increasing hole size have been tested. The results of the hole size tests indicated that smaller holes do improve the transition from laminar to turbulent flow conditions but the geometry contour of the hole pattern is more significant to overall meter linearity than hole size.

Another form of conditioning disc 6 which has been found to produce a meterfactor response with a relatively smooth transitional flow region comprises a hole pattern forming laterally - spaced rows of separate holes extending parallel to the jet-forming orifice 6. Removal of the material from between the holes forms slots 12 as seen in Figure 6. This second conditioner was found to produce an even better result than the first disc (Figure 4). It also gave a lower pressure loss and was less susceptible to particle blockage.

The geometry of the slot-type conditioning disc 6 is shown in Figure 6, having three parallel slots 12 of 3.2mm width separated by elongate bluff blocking regions 13 of 3.2mm width. Again the disc is of 22mm diameter and 2mm thickness.

The meterfactor response plot for use of this conditioner is shown in Figure 7. The curve is very flat. with very smooth transitions between the fully laminar and turbulent flow conditions. The response is linear over a very wide flow range, from Reynolds number 550 upwards, requiring linearity compensation only at very low flowrates where the meterfactor rises with reducing flowrate due to viscous damping effects which reduce oscillation frequency.

The geometry of the slot-type conditioning disc 6 is such that vortices are shed from the bluff blocking regions 13 between the slots 12 in the form of vortices. Each vortex travels through the convergent entry passage, creating severe disturbances at the orifice 2. The disc affects the profile of the inlet flow in planes perpendicular to the orifice 2 to a greater extent than in planes parallel to the orifice. However, the convergence of the entry passage 1 is itself two-dimensional, because the convergence occurs only in planes perpendicular to the orifice. The convergence, therefore, distorts the velocity flow profile in the perpendicular planes, thus amplifying the disturbances caused by the conditioner.

Using any of the forms of conditioning disc 6 described, the transition from one flow stage to another is improved by disturbing the jet flow so that turbulent conditions are sustained at lower flowrates. The discs are able to perform at low Reynolds numbers to alter a laminar (semi-parabolic) velocity flow profile so that it is more like a turbulent (flat) velocity profile and to increase turbulence levels so that the overall flow condition is like that of fully developed turbulent flow at higher Reynolds numbers. The flattening of the velocity flow profile is achieved by contouring the hole patter of the conditioning disc (Figure 4 - smaller holes 10 in the centre region and larger holes 11 in the outer region) or by suitable selection of the number and spacing of slots 12 and blocking regions 13 (Figure 6). Correct turbulence levels are achieved by selecting hole size or blocking region width, respectively. Turbulent mixing is achieved by shedding vortices and turbulent eddies. Flow visualisation of the oscillator inlet flow using the conditioners show turbulent eddies shed at a high rate producing very disturbed flow stream lines through the entry passage 1. The vortices shed from the conditioning device produce much greater mixing of the inlet flow even at low Reynolds numbers.

## Claims

1. A fluidic flowmeter of an oscillating jet type in which a jet of fluid discharged from an elongate jet-forming orifice (2) is caused to oscillate in a plane transversely of the plane of the orifice, the rate of oscillation of the jet being measurable as an indication of the flowrate through the meter, the flowmeter comprising flow conditioning means (6) which comprises a bluff body which is positioned upstream of the jet-forming orifice and is effective under laminar and transitional inlet flow conditions to flatten the velocity flow profile and to introduce turbulence into the flow whereby turbulent flow conditions are simulated at the orifice.

2. A fluidic flowmeter according to Claim 1 in which the conditioning means (6) forms a plurality of openings (12) which are spaced apart laterally of the general direction of flow and through which the inlet flow passes.

3. A fluidic flowmeter according to Claim 2 in which the conditioning means (6) forms a central array of relatively small openings (10) encircled by relatively large openings (11).

4. A fluidic flowmeter according to Claim 1 in which the conditioning means (6) forms bluff elongate blocking elements (13) which are spaced apart laterally of the general direction of flow and which separate elongate passages (12) through which the inlet flow passes.

5. A fluidic flowmeter according to Claim 4 in which each elongate flow passage comprises a row of separate openings.

6. A fluidic flowmeter according to Claim 4 in which each elongate flow passage is in the form of an elongate slot (12).

7. A fluidic flowmeter according to Claim 4 in which the elongate blocking elements (13) and the elongate passages (12) lie in planes parallel to the plane of the jet-forming orifice (2).

8. A fluidic flowmeter according to any one of Claims 1 to 7 in which the bluff body is in the form of a multi-apertured plate.

9. A fluidic flowmeter according to any one of Claims 1 to 8 in which the conditioning means (6) is connected to the jet-forming orifice (2) by an entry passage (1) which in the direction of flow is convergent in planes perpendicular to the plane of the orifice.

## Patentansprüche

1. Flüssigkeitsdurchflussmesser der Art mit einem hin- und hergehenden Strahl, bei welchem ein aus einer länglichen Strahl-bildenden Öffnung (2) abgegebener Flüssigkeitsstrahl dazu gebracht wird, sich in einer quer zu der Ebene der Öffnung liegenden Ebene hin- und herzubewegen, wobei die Oszillationsgeschwindigkeit des Strahls als eine Angabe für die Strömungsgeschwindigkeit durch das Messgerät messbar ist, wobei der Durchflussmesser eine Strömungsbehandlungsvorrichtung (6) umfasst, welche einen stumpfen Körper aufweist, der oberstromig von der Strahl-bildenden Öffnung angeordnet und unter laminaren und Übergangs-Einlauffließbedingungen wirksam ist, um das Strömungsgeschwindigkeitsprofil zu glätten und Turbulenzen in die Strömung einzuleiten, wodurch turbulente Strömungsbedingungen an der Öffnung simuliert werden.

2. Flüssigkeitsdurchflussmesser gemäß Anspruch 1, bei welchem die Behandlungsvorrichtung (6) eine Vielzahl von Öffnungen (12) bildet, die seitlich von der allgemeinen Strömungsrichtung beabstandet angeordnet sind, und durch die der Einlaufstrom läuft.

3. Flüssigkeitsdurchflussmesser gemäß Anspruch 2, bei welchem die Behandlungsvorrichtung (6) eine zentrale Anordnung von relativ kleinen Öffnungen (10) bildet, welche von relativ großen Öffnungen (11) eingekreist sind.

4. Flüssigkeitsdurchflussmesser gemäß Anspruch 1, bei welchem die Behandlungsvorrichtung (6) stumpfe, längliche Blockierelemente (13) bildet, die seitlich von der allgemeinen Strömungsrichtung beabstandet angeordnet sind, und die längliche Durchgänge (12) unterteilen, durch welche der Einlaufstrom läuft.

5. Flüssigkeitsdurchflussmesser gemäß Anspruch 4, bei welchem jeder längliche Strömungsdurchgang eine Reihe getrennter Öffnungen umfasst.

6. Flüssigkeitsdurchflussmesser gemäß Anspruch 4, bei welchem jeder längliche Strömungsdurchgang in Form eines lang gestreckten Schlitzes (12) ausgebildet ist.

7. Flüssigkeitsdurchflussmesser gemäß Anspruch 4, bei welchem die länglichen Blockierelemente (13) und die länglichen Durchgänge (12) in Ebenen liegen, die parallel zu der Ebene der Strahl-bildenden Öffnung (2) angeordnet sind.

8. Flüssigkeitsdurchflussmesser gemäß irgendeinem der Ansprüche 1 bis 7, bei welchem der stumpfe Körper in Form einer Platte mit vielfachen Öffnungen. ausgebildet ist.

9. Flüssigkeitsdurchflussmesser gemäß irgendeinem der Ansprüche 1 bis 8, bei welchem die Behandlungsvorrichtung (6) an die Strahl-bildende Öffnung (2) durch einen Einlassdurchgang (1) angeschlossen ist, der in der Strömungsrichtung in senkrecht zu der Ebene der Öffnung liegenden Ebenen konvergierend ausgebildet ist.

## Revendications

1. Débitmètre fluidique de type à jet oscillant dans lequel un jet de fluide déchargé à partir d'un orifice de formation de jet allongé (2) est mis en oscillation dans un plan transversal au plan de l'orifice, la vitesse d'oscillation du jet pouvant être mesurée en tant qu'indication de la vitesse de débit au travers du débitmètre, le débitmètre comprenant des moyens de conditionnement d'écoulement (6) qui comprennent un corps non profilé qui est positionné en amont de l'orifice de formation de jet et qui est efficace dans des conditions laminaires et transitionnelles d'écoulement à l'admission pour aplanir le profil de la vitesse d'écoulement et pour introduire une turbulence dans l'écoulement par laquelle les conditions d'écoulement turbulent sont simulées à l'orifice.

2. Débitmètre fluidique selon la revendication 1 dans lequel les moyens de conditionnement (6) forment une pluralité d'ouvertures (12) qui sont séparées latéralement de la direction générale d'écoulement et au travers desquelles passe l'écoulement à l'admission.

3. Débitmètre fluidique selon la revendication 2 dans lequel les moyens de conditionnement (6) forment un réseau central d'ouvertures relativement petites (10) entourées par des ouvertures relativement grandes (11).

4. Débitmètre fluidique selon la revendication 1 dans lequel les moyens de conditionnement (6) forment des éléments de blocage allongés non profilés qui sont séparées latéralement de la direction générale d'écoulement et qui séparent des passages allongés (12) au travers desquels passe l'écoulement à l'admission.

5. Débitmètre fluidique selon la revendication 4 dans lequel chaque passage allongé d'écoulement comprend une rangée d'ouvertures séparées.

6. Débitmètre fluidique selon la revendication 4 dans lequel chaque passage allongé d'écoulement se présente sous la forme d'une fente allongée (12).

7. Débitmètre fluidique selon la revendication 4 dans lequel les éléments de blocage allongés (13) et les passages allongés (12) se trouvent dans des plans parallèles au plan de l'orifice de formation de jet (2).

8. Débitmètre fluidique selon l'une quelconque des revendications 1 à 7 dans lequel le corps non profilé se présente sous la forme d'une plaque à ouvertures multiples.

9. Débitmètre fluidique selon l'une quelconque des revendications 1 à 8 dans lequel les moyens de conditionnement (6) sont connectés à l'orifice de formation de jet (2) par un passage d'entrée (1) qui est convergeant dans des plans perpendiculaires au plan de l'orifice, dans la direction de l'écoulement.
